# EUROPEAN PATENT SPECIFICATION

(11) **EP 0 254 188 B1**
(45) Date of publication and mention of the grant of the patent: **14.04.1993**
(21) Application number: 87110176.2
(22) Date of filing: 14.07.1987
(51) Int. Cl.: G01C 9/10, G01C 9/06

(54) **Tilt sensor**
Neigungssensor
Senseur d'inclinaison

(30) Priority: 21.07.1986 JP 169930/86
(43) Date of publication of application: 27.01.1988
(73) Proprietor: TDK Corporation, Chuo-ku, Tokyo-to 103 (JP)
(72) Inventor: Odagawa, Yoshimoto, Chiba-shi Chiba-ken (JP); Yanagisawa, Yasushi, Chiba-shi Chiba-ken (JP); Imaizumi, Hiraku, Inba-gun Chiba-ken (JP)
(74) Representative: Schwabe - Sandmair - Marx

(56) References cited:
- DE-A- 2 430 710
- GB-A- 2 158 239
- PATENT ABSTRACTS OF JAPAN, vol. 9, no. 250 (C-394)[1973], 8th October 1985; & JP-A-60 100 712 (KIDOU KENSETSU KOGYO K.K.) 04-06-1985
- PATENT ABSTRACTS OF JAPAN, vol. 9, no. 296 (P-407)[2019], 22nd November 1985; & JP-A-60 133 370 (DIESEL KIKI K.K.) 16-07-1985
- PATENT ABSTRACTS OF JAPAN, vol. 7, no. 156 (P-209)[1301], 8th July 1983; & JP-A-58 66 812 (NIPPON KOKAN K.K.) 21-04-1983

## Description

This invention relates to a tilt sensor for detecting a tilt with high precision and high reliability which may be used in a control system for resetting a tilted object to a horizontal position such as attitude control.

Conventional tilt measuring devices of this type vary from simple devices such as a level and a device used in an oil stove to visually show horizontality by suspending a counterweight through a chain to a sophisticated one such as a gyroscopic horizon.

Although a simple device such as a level is inexpensive, a tilt can be checked by only a visual observation. Therefore, it is not designed to be used in a control system for resetting a tilted object to a horizontal position. Use of a sophisticated device such as a gyroscopic horizon is limited to an expensive machine such as an aircraft.

From GB-A-2 158 239 it is known to provide a magnetic angular position sensor which may be used as an inclinometer, comprising a chamber, a body within said chamber, the chamber being otherwise filled with a ferrofluid, the body being provided with at least one pair of magnetic poles and having a substantially neutral buoyancy, whereby the body floats centrally within the ferrofluid chamber, and a magnetic flux detection means attached to the exterior of the chamber responsive to changes in the magnetic flux caused by rotation of the body within the chamber.

In case the sensor is tilted, the permanent magnet fixed to the buoyant core is floated in a horizontal plane so that the intensity of magnetism around the magnetic flux detection means changes.

The main drawback of the above-described embodiment is that as the buoyant core carrying a pair of magnetic poles is rotated in a completely ferrofluid-filled spherical chamber, the frictional drag between the ferrofluid and the buoyant core against the rotation is very high. As a result the response speed is very low and thus not preferable. Furthermore the arrangement is very complicated because the permanent magnet is to be fixed with high accuracy to the body so that the poles are exactly diametrically opposed on the buoyant core diameter lying on the axis passing through the detector means.

It is an object of the subject invention to solve the above problems by providing a tilt sensor having a less complicated structure and capable of detecting a tilt with high reliability and precision.

This object will be achieved by a tilt sensor according to claim 1. The arrangement of the invention as claimed causes the permanent magnet - being housed to be freely movable on a concave bottom surface in a sealed space - when the case is tilted to move to the lowest position by its weight. Thereby the permanent magnet floats magnetically in a minimum amount of magnetic fluid which serves as a lubricant, and the permanent magnet and the magnetic fluid integrally slide. Therefore, the response speed is very high.

The above and other objects, features and advantages of the present invention will now be described on a preferred embodiment with reference to the accompanying drawings, in which:

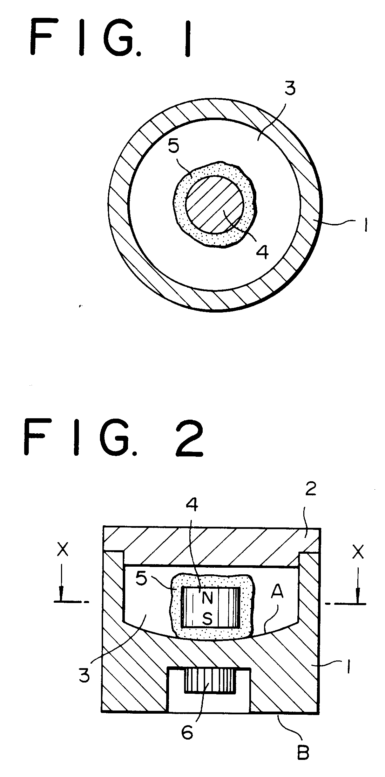

Figs. 1 and 2 illustrate a sectional view of an embodiment of the present invention.

### DETAILED DESCRIPTION OF THE PREFERRED EMBODIMENT:

Figs. 1 and 2 show an embodiment of the present invention. Fig. 1 is a sectional view taken along the line X - X of Fig. 2. Referring to Figs. 1 and 2, reference numeral 1 denotes a nonmagnetic case made of a material such as aluminum; and 2, a cover made of the same material as that of the case, having a space 3 therein. A bottom surface A defining the space 3 is a smooth arcuated surface. Reference numeral 4 denotes a substantially disk-like (or columnar) permanent magnet. A magnetic fluid 5 is coated on the entire surface of the permanent magnet 4. The magnetic fluid is prepared by mixing spherical magnetic metal powder (e.g., an iron powder) particles having a diameter of 70 Å to 120 Å with an oil such as paraffin oil having a comparatively low viscosity at a volume ratio of 50 : 50. The magnetic fluid has fluidity. Reference numeral 6 denotes a magnetic sensing element mounted so as to oppose the bottom of defining the space through the case. In this case, a Hall element is used as the magnetic sensing element 6.

In the embodiment with the above arrangement, when a reference surface of the case 1, e.g., a bottom surface B, is set to be horizontal, the magnet 4 is moved to the lowest position of the bottom surface A, i.e., the central portion thereof, by its weight. As a result, the magnetic sensing element 6 receives the strongest magnetism. When the bottom surface B is tilted from the horizontal plane, the magnet 4 is moved toward a lower position of the bottom surface A by its weight. In this case, since the magnetic fluid 5 serves as a lubricating oil, the magnet 4 can be moved with a very small resistance, and hence it can be easily moved to the lowest position of the bottom surface A. Since the magnet 4 is moved away from the magnetic sensing element 6, magnetism to be detected is weakened by a displacement of the magnet 4.

The position of the magnet 4 relative to the magnetic detection element 6 changes in accordance with a tilt angle of the case 1, and hence the magnetism corresponding to the tilt angle can be detected. Therefore, a tilt of an apparatus incorporating the tilt sensor can be detected and attitude control of the apparatus can be performed using the output of the magnetic sensing element 6.

Note that although a Hall element is used as the magnetic sensing element in the embodiment, any other element can be used as long as it can sense magnetism. A mounting position of the magnetic sensing element is not limited to the position in the embodiment, and the number of elements is not limited to one. For example, a plurality of magnetic sensing elements may be disposed on the side walls of the space, and more specifically, the elements may be respectively disposed on the four wall positions at equal angular intervals, thereby detecting directivity as well as a tilt.

As has been described above, according to the present invention, a tilt can be detected with high precision by a simple arrangement, and its detection signals can be applied to a control system for attitude control or the like.

## Claims

1. A tilt sensor comprising a nonmagnetic case (1) having a space (3) sealed therein bounded by a concave bottom surface, a permanent magnet (4), the surface of said magnet being at least partially coated with a magnetic fluid, said permanent magnet being housed to be freely movable in the sealed space (3), and a magnetic sensing element mounted externally of said case (1) opposite said bottom surface (A), in order to detect the magnetic field of said permanent magnet, **characterized** in that
(a) said permanent magnet (4) has a specific weight larger than that of said magnetic fluid (5), and said permanent magnet (4) itself is caused to float from said case bottom surface by attracting said magnetic fluid (5), and
(b) the level of said magnetic fluid (5) with respect to said permanent magnet (4) is set to be such that said magnetic fluid (5) is at least present between said permanent magnet (4) and said case bottom surface, and that a space is present between said magnetic fluid (5) and at least one wall surface of said case.

## Patentansprüche

1. Neigungssensor mit einem unmagnetischen Gehäuse (1), welches einen Raum (3) umschließt, der durch eine konkave Bodenoberfläche begrenzt wird, einem Permanentmagneten (4), dessen Oberfläche zumindest teilweise mit einem magnetischen Fluid überzogen ist, der Permanentmagnet freibeweglich in dem umschlossenen Raum (3) eingebaut ist, und mit einem magnetischen Fühler (4), der außerhalb des Gehäuses (1) und gegenüber der Bodenoberfläche (A) angebracht ist, um das Magnetfeld des Permanentmagneten zu erfassen, **dadurch gekennzeichnet,** daß
(a) der Permanentmagnet (4) ein höheres spezifisches Gewicht als das des magnetischen Fluids (5) aufweist, und der Permanentmagnet (4) veranlaßt wird, dadurch daß er das magnetische Fluid (5) anzieht auf der Gehäusebodenoberfläche zu schweben, und
(b) der Pegel des magnetischen Fluids (5) bezüglich des Permanentmagneten (4) so gewählt wird, daß sich magnetisches Fluid (5) zumindest zwischen dem Permanentmagneten (4) und der Gehäusebodenoberfläche befindet, und daß zwischen dem magnetischen Fluid (5) und zumindest einer Wandoberfläche des Gehäuses ein Raum verbleibt.

## Revendications

1. Détecteur d'inclinaison comprenant un boîtier non magnétique (1) possédant un espace intérieur (3) scellé limité par une surface de fond concave, un aimant permanent (4), dont la surface est au moins partiellement revêtue d'un fluide magnétique, cet aimant permanent étant disposé pour se mouvoir librement dans l'espace scellé (3), et un élément détecteur magnétique monté à l'extérieur du boîtier (1) à l'opposé de la surface de fond (A) en vue de détecter le champ magnétique de l'aimant permanent, caractérisé en ce que:
(a) l'aimant permanent (4) a un poids spécifique supérieur à celui du fluide magnétique (5), l'aimant (4) lui-même étant amené à flotter à partir de la surface de fond du boîtier par l'attraction du fluide magnétique (5), et
(b) le niveau du fluide magnétique (5) par rapport à l'aimant permanent (4) est réglé pour que le fluide magnétique (5) soit au moins présent entre l'aimant permanent (4) et la surface de fond du boîtier, et qu'un espace existe entre le fluide magnétique (5) et au moins une surface de paroi de ce boîtier.
